# EUROPEAN PATENT SPECIFICATION

(11) **EP 1 553 750 B1**
(45) Date of publication and mention of the grant of the patent: **07.07.2010**
(21) Application number: 04290056.3
(22) Date of filing: 08.01.2004
(51) Int. Cl.: H04M 1/60

(54) **Communication terminal having adjustable hearing and/or speech characteristics**
Kommunikationsendgerät mit einstellbaren Gehör- und/oder Sprachmerkmalen
Terminal de communication à caractérisitiques ajustables d'audition et/ou de parole

(43) Date of publication of application: 13.07.2005
(73) Proprietor: IPG Electronics 504 Limited, St Peter Port Guernsey GY1 3QL (GB)
(72) Inventor: Kabs, Joachim, Dr., 95490 Mistelgau (DE)
(74) Representative: Talbot-Ponsonby, Clare Josephine

(56) References cited:
- EP-A- 1 315 362
- WO-A-98/51124
- US-A1- 2002 111 796
- US-A1- 2003 014 246
- US-B1- 6 212 496
- US-B1- 6 381 469

## Description

The invention relates to a terminal for communicating via a telecommunication network, in particular a wireless telephone, comprising a loudspeaker, a microphone, a transceiver unit for sending and receiving data via the telecommunication network and a coding/decoding unit for coding/decoding speech data exchanged via the telecommunication network. The invention further relates to a method of communicating through such terminal.

Transmission of speech via enhanced telecommunication networks occurs by converting between analogue speech signals and digital speech data encoding the information of the analogue speech signal. Beside other effect, the quality of transmission heavily depends on the accuracy of these conversions and the bandwidth provided for the digital transmission of speech data within the telecommunication network.

For example, ITU-T Recommendation G.729 describes a speech coding standard for digital speech communication. An input speech signal is applied to a speech encoder for encoding the input speech. The encoded speech signal is transmitted via a communication channel of the telecommunication network to a speech decoder. The speech coding involves encoding and decoding operations using linear prediction algorithms. A filter applied at the output of the speech decoder is foreseen to reduce the perceived coding noise and thus improves the quality of the decoded speech.

Document US 6 381 469 discloses a terminal according to preamble of claim 1.

It is the object of the present invention to improve the conversion between analogue speech signals and digital speech data within enhanced telecommunication systems.

The object of the present invention is achieved by a terminal for communicating via a telecommunication network comprising a loudspeaker, according to claim 1.. The object of the present invention is further achieved by a method of communicating through a terminal according to claim 8.

The above-described state of the art coding and decoding approach of speech signals uses predefined algorithms for coefficient adaptation within a predefined hearing spectrum. Individual hearing characteristics, e. g. frequency dependencies, hearing defects, loss of frequency and audible level or loss of dynamic range, are not considered yet. The known different types of speech coding and decoding approaches aims to improve the transmission of speech data and tries to reduce the bandwidth required for such transmission by a general approach solely taking a predefined hearing spectrum of the user into account. In contrast to this, the invention deals with a personalized adaptation of such algorithms to the user specific hearing characteristics and/or to the user specific vocal characteristics. Due to such individual adaptation of the conversion process to the user, an improved quality of speech as well as bandwidth reductions are achievable. E. g. it is possible to adapt the frequency characteristic of the speech signal presented to the user or transmitted via the network to frequency dependent hearing losses of the user. Even if the mobile phone has to be adjusted once the treatment has a lasting effect resulting in a remarkable improvement of speech quality. Further, it is possible to save bandwidth by omitting the transmission of frequency ranges through the network that are not usable for the user.

Further advantages are provided by the embodiments of the invention indicated by the dependent claims.

Further, it is possible to control the adjustment of a filter unit which is actually designated to postfilter the decoded speech, to the specific hearing characteristic of the user. For example, a user specific set of individual scaling factors for the long-term postfilter and the short-term postfilter of such filter unit adjusts the filter unit to the specific hearing characteristic of the user.

Further, the terminal may comprise an adaptation unit for adjusting, under control of the control unit, the frequency characteristic of the speech signal to the frequency specific hearing characteristic of the user. Such additional speech adaptation unit provides lots of possibilities to adapt the frequency characteristics of the speech signal to frequency dependence's hearing defects, and loss of dynamic range, frequency and audible level of the respective user.

For example, the adaptation unit comprises a frequency shaping unit for applying a different amplification level to different frequency ranges. This frequency shaping technique is used to contour the amplification to match frequency dependant hearing losses.

Further, the control unit may determine frequency ranges within the hearing characteristic of the user having higher threshold intensity. For example, such ranges are ranges of frequency specific hearing losses. The speech adaptation unit comprises a frequency compression unit which shifts information encoded in such frequency ranges to other frequency ranges by applying dynamic frequency range compression. Thereby, the representation of the digital speech signal presented by the terminal as acoustic signal to the user may be perfectly shaped to the frequency dependent hearing characteristic of the specific user.

According to a preferred embodiment of the invention, the control unit determines the hearing characteristic of the user at a personalization phase, calculates the user specific output parameter sets based on the determined hearing characteristic and stores the calculated user specific output parameter set. In particular, the terminal presents various frequency tones at different intensities to the user and determines by such procedure threshold intensities for these various frequencies. Various advantages are achieved by such approach. The adaptation of terminals to the hearing characteristic of a user does not require additional equipment and services which result in a user friendly and cheap solution.

Further, it is possible that the control unit receives data about the hearing characteristic of the user via the telecommunication network or via a communication interface of the terminal, for example a serial port or a short-range interface, e. g. a bluetooth or wireless LAN interface. The control unit calculates the user specific output parameter set based on the determined hearing characteristic and stores the calculated user specific output parameter. For example, the hearing characteristic of a user is determined at the point of sales and stored on the SIM-card of the specific user (SIM = Subscriber Identity Module).

These as well as other features and advantages of the invention will be better appreciated by reading the following detailed description of the presently preferred exemplary embodiments taken in conjunction with accompanying drawings of which:
- Fig. 1: is a block diagram showing a communication system with a terminal according to the present invention.
- Fig. 2: is a block diagram showing a terminal according to a second embodiment of the present invention.

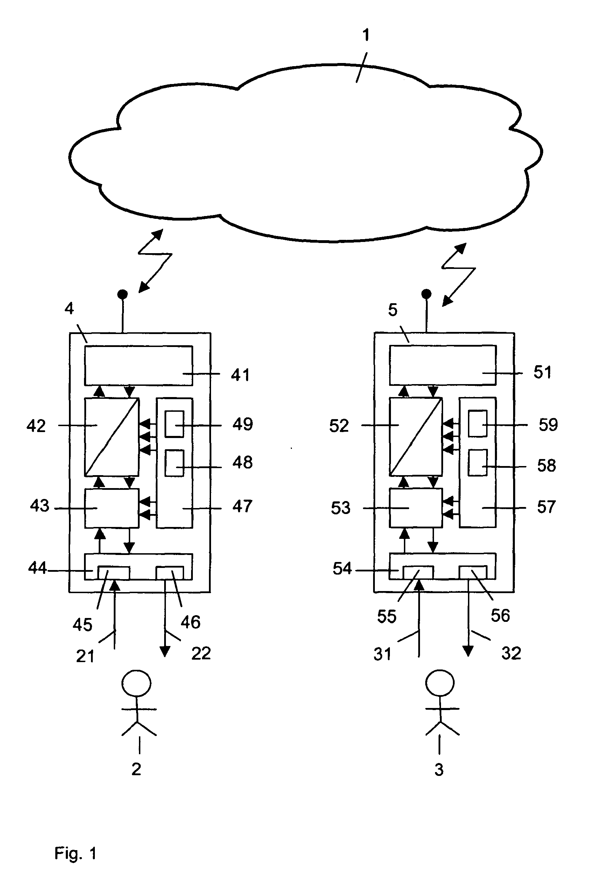

Fig. 1 shows a telecommunication network 1 and two terminals 4 and 5, associated with users 2 and 3, respectively.

The telecommunication network 1 is a mobile telecommunication network, for example a cellular network according to the GSM, UMTS or CDMA 2000 standard (GSM = Global System for Mobil Communication, UMTS = Universal Mobile Telecommunication System). But, it is also possible that the telecommunication network 1 is a PSTN or ISDN telephone network or a data network used to transmit digitized speech data (PSTN = Public Switched Telecommunication Network; ISDN = Integrated Services Digital Network).

The terminals 4 and 5 are cellular phones according to the communication standard of the telecommunication network 1. But, it is also possible that the terminals 4 and 5 are other kind of terminals capable to transfer speech data via the telecommunication network 1. For example, the terminals 4 and 5 are Laptops equipped with a wireless LAN interface that have the ability to provide a smart phone functionality to its respective user.

The terminals 4 and 5 composed of a hardware platform comprising a microprocessor, memory devices and a plurality of peripheral components as well as software programs executed by this hardware platform. The functionalities of the terminals 4 and 5 described in the following are performed by the execution of these software programs by the aforementioned hardware platform. From functional point of view, the terminals 4 and 5 have transceiver units 41 and 51, coding/decoding units 42 and 52, filter units 43 and 53, input/output units 44 and 54 and control units 47 and 57, respectively. The input/output units 44 and 54 comprise beside other input and output means, for example keypad, display or camera, microphones 45 and 55 and loudspeakers 46 and 56, respectively.

The details of the aforementioned components of the terminals 4 and 5 are described in the following by hand of terminal 4.

The transceiver unit 41 comprises the functionalities of the terminal 4 enabling the terminal 4 to communicate via an air interface with the telecommunication network 1. For example, the transceiver unit 41 comprises the radio frequency part of the terminal 4 as well as the functionalities to handle the low-level communication protocols executed for the transmission of speech data via this air interface.

The coding/decoding unit 42 codes/decodes speech data exchanged via the telecommunication network 1. For example, the coding/decoding unit 42 implements a GSM full rate and/or a GSM half rate speech codec according to the ITU-T Recommendation G.729 speech coding standard. The coding/decoding unit 42 encodes the digital speech data received from the filter unit 43 into a data form meeting the bandwidth restrictions of the upstream communication channel between the terminal 4 and the telecommunication network 1. Further, the coding and decoding unit 42 computes the reverse process, such means to decode the digital data received via the downstream channel from telecommunication network 1 and convert these data in a digital speech signal representation capable to be converted via a digital to analogue conversion to a usable analogue speech signal.

The filter unit 43 is a filter unit for an additive postfiltering of the decoded speech. The speech signal is typically encoded and decoded frame by frame, wherein each frame has a fixed length somewhere between 5 ms to 40 ms. In predictive coding of speech, each frame is often further divided into equal lengths frames having a lasting between 1 and 10 ms. The speech coder/decoder receives a bit stream representation of an encoded speech signal. It decodes the bit stream to produce a decoded speech signal. The filter unit 43 processes the decoded speech signal to derive and produce filter coefficients applied by the filter unit 43 on the decoded speech signal. Preferably, the coefficients and parameters of the postfilter are data updated once a sub-frame and held constant within each sub-frame. As the filter coefficients are updated periodically, the filter unit 43 operates as an adaptive or time varying filter in response to the update of the filter coefficients computed by the filter controller of the filter unit 43.

The control unit 47 is a parametrizable control unit that uses a user specific output parameter set 49 for adapting the acoustic speech signal outputted by the loudspeaker 46 of the terminal 4 to the individual hearing characteristic of the user 2.

Preferably, the output parameter set 49 influences or controls the coding and/or decoding algorithm of the coding/decoding unit 42 as well as the algorithm of the filter unit 43 used for computing the adaptive filter coefficients applied by the filter unit 43 on the decoded speech signal.

For example, the output parameter set comprises a set of parameters forming parameters of the encoding/decoding algorithm of the encoding/decoding unit 42, for example the coding property represented by code words. Thereby, these parameters influence the mapping between code words and speech signal properties represented by a code word.

Further, another part of parameters of the input parameter set 49 represent parameters of the algorithm applied by the filter controller of the filter 43 to calculate the adaptive filter coefficients. For example, the filter unit 43 has a short-term filter and a long-term filter. The short-term filter is a simple all-poled filter having a minimal spectral tilt and thus reduces muffling in the decoded speech. The long-term postfilter is used to perform long-term filtering to attenuate spectral valleys between harmonics in the speech spectrum. Dependent on the calculation of the speech coefficient by the filter controller such short-term and long-term postfilter has a spectral tilt. This fact is used by the controller 47 to contoure the filter characteristics of the short-term post filter and long-term post filter to the hearing characteristic of the user 2. Thereby, the short term post filter and long term post filter preferably used in a mobile terminal to improve the quality of decoded speech is in addition used to perform a user specific postfiltering of the decoded speech signal.

Preferably, a group of parameters of the output parameter set 49 is used as input parameters or the decoding algorithm of the coding/decoding unit 42 and another group of parameters of the output parameter set 49 is used as input parameters for the filter coefficient computation algorithm of the filter controller of the filter unit 43. But, it is also possible that the control unit 47 solely provides input parameters for the coding/decoding unit 42 or to the filtering unit 43.

Further, the control unit 47 uses the input parameter set 48 to adapt the vocal characteristic of an acoustic speech signal received by the microphone to a normalized speech characteristic. The parameters of the input parameter set forms input parameters of the encoding algorithm used by the coding/decoding unit 42 to encode a speech signal received from the microphone 21. The input parameter set influences the mapping between code words and speech signal properties represented by the specific code word.

Preferably, the control unit 47 calculates the input parameter set 48 and the output parameter set 49 based on hearing characteristic data and speech characteristic data of the user 2 inputted in the terminal 4.

For example, the hearing characteristic of a user is determined at the point of sales by help of a corresponding instrument presenting various frequency tones at different intensities to the user 2 and determines by the reaction of the user 2 the threshold intensity for each of these various frequencies. The instrument calculates a frequency dependent threshold intensity function showing hearing defects, frequency dependencies, loss of frequency and audible level and loss of dynamic range of user 2. This tuning function represents a hearing characteristic which is transmitted via a serial interface to the terminal 4. Further, it is also possible to download these data via the communication network 1 to the terminal 4, if the above-described instrument is equipped with a communication interface to the communication network 1. The received data as well as internal data specifying the influence of the different parameters of the output parameter set 49 used as input parameters for the calculation performed by the control unit 47. Due to the selection of the parameters of the output parameter set 49 the control unit 47 adapts the filter characteristic of the filter unit 43 as well as the decoding process of the coding/decoding unit 42 to the specific hearing characteristic of the user 2.

Further, it is possible that the calculation of the input parameter set 48 and the output parameter set 49 is performed outside the terminal 4, for example within the instrument used at the point of sales for determining the hearing characteristic of the user 2. In such embodiment, the input parameter set 48 and the output parameter set 49 are inputted in terminal 4 and applied by the control unit 47 on algorithms of the coding/decoding unit 42 and the filter unit 43. For example, the input parameter set and the output parameter set is stored at the point of sales on the SIM-card assigned to the user 2 and available within the terminal 4, as soon as this SIM-card is connected with the electronics of the terminal 4.

For example, the user 2 has a speech conversation with the user 3 through the telecommunication network 1. An acoustic speech signal 21 from the user 2 is received by the microphone 45. An analogue to digital converter converts the received acoustic signal to a digital signal applied to the coding/decoding unit 42. This unit applies a user specific encoding algorithm on the received data taking the specific speech characteristic of the user 2 into account to achieve an optimized encoding of the speech signal. The transceiver 41 transmits the digital signal received from the coding/decoding unit 42 via an upward channel to the telecommunication network 1 which forwards the data to the transceiver 51 of the terminal 5. The coding/decoding unit 52 and the filter unit 53 applies a user specific decoding and postfiltering algorithm on the received data taking the individual hearing characteristic of the user 3 into account. The loudspeakers 56 output an acoustic signal 32 well adapted to the hearing characteristic of the user 3. Vice versa, the speech signal 31 of the user 3 is encoded by taking the specific speech characteristic of the user 3 into account and decoded by taking the specific hearing characteristic of the user 2 into account. Consequently, an acoustic signal 22 is outputted by the loudspeaker 46 of a terminal 4 well adapted to the hearing characteristic of the user 2.

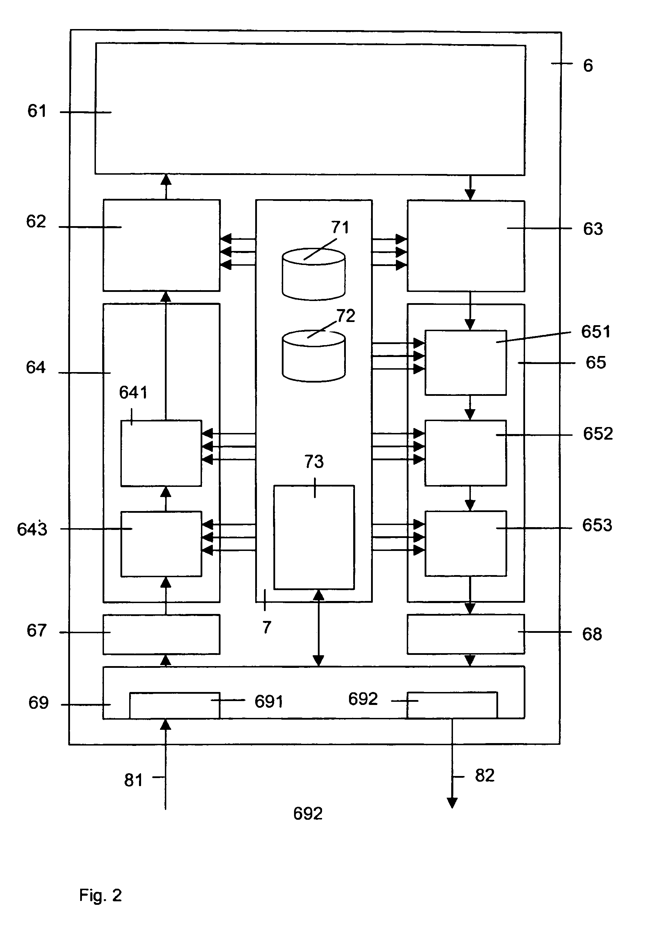

In the following, further embodiment of the invention are described by hand of Fig. 2.

Fig. 2 shows a terminal 6 having a transceiver 61, a coding unit 62, a decoding unit 63, two speech adaptation units 64 and 65, an analogue to digital converter 67, a digital to analogue converter 68, an input/output unit 69 and a control unit 7. The input/output unit 69 has a microphone 691 receiving an acoustical signal 81 and a loudspeaker 692 outputting an acoustic signal 82.

The transceiver 61 implements the same functionalities as the transceiver 41 of Fig. 1. The coding unit 62 and the decoding unit 63 form a coding/decoding unit providing the functionalities of the coding/decoding unit 42 of Fig. 1.

The speech adaptation unit 65 adjusts, under control of the control unit 7, the frequency characteristic of the speech signal received from the decoder unit 63 to the frequency specific hearing characteristic of the user assigned to the terminal 6. The speech adaptation unit 65 comprises a filter unit 651, a frequency compression unit 652 and a frequency shaping unit 653.

The filter unit 651 performs the function of the filter unit 43 according to Fig. 1, that means it performs an adaptive postfiltering of the decoded speech signal received from the decoding unit 63.

The frequency compression unit 652 shifts information encoded in specified frequency ranges to other frequency ranges by applying dynamic frequency range compression. It compresses the dynamic range of the input signal to match the dynamic range of the user assigned to the terminal 6. Preferably, it applies multi channel and/or multi level compression which divide the input signal into two or more frequency bands and applies separate frequency compressions on each of the frequency bands. Such frequency compression may rely on the Discrete Fourier Transform or a Fast Fourier Transform algorithm. The compressor filter is applied in the frequency domain and an inverse Fast Fourier Transform is used to produce the amplitude compressed signal. The filter coefficients defining the frequency ranges and compression rates are set by the control unit 7.

The frequency shaping unit 653 applies different amplification levels to different frequency ranges. The frequency shaping unit 653 is used to contour the amplification of the speech signal to match frequency dependent hearing losses of the user of the terminal 6. The control unit 7 sets the filter coefficients as well as the amplification factors of the frequency shaping unit 653.

The speech adaptation unit 64 adjusts, under control of the control unit 7, the frequency characteristic of the speech signal received from the user assigned to the terminals 6 to a normalized speech characteristic. It comprises a frequency compression unit 641 and a frequency shaping unit 643 performing the functionalities of the frequency compression unit 652 and the frequency shaping unit 653, respectively.

The control unit 7 comprises an output parameter set 71, an input parameter set 72 and a function 73 controlling the self-extraction of the hearing characteristic and the speech characteristic of the user assigned to the terminal 6.

The control unit 7 uses the output parameter set 71 and the input parameter set 72 as described for the control unit 47 of Fig. 1 to adjust the coding unit 62, the decoding unit 63 and the filter unit 651 to the hearing characteristic of the user assigned to the terminal 6. Further, parameters of the output parameter set 71 specify filter coefficients of the frequency shaping unit 653 and the frequency compression unit 652. Accordingly, the input parameter set 72 specifies the filter coefficients of the frequency shaping unit 643 and the frequency compression unit 641. During calculation of the output parameter set 71 and the input parameter set 72, the control unit 7 determines the degree of frequency dependent hearing losses of the user of the terminal 3 and selects, based on such calculation, the parameters of the output parameter set 71 assigned to the frequency shaping unit 653 and the frequency compression unit 652. Dependent on the results of such computation, it applies an increase of amplification or a frequency shift to compensate the hearing losses.

The function 73 determines the hearing characteristic of the user of the terminal 6 at a personalization phase. For example, the function controls the presenting of various frequency tones at different intensities to the user by the loudspeaker 692 and monitors the reaction of the user on the presented acoustic signal. Based on such user input it calculates a frequency dependent hearing characteristic of the user which is in the following used to compute the output parameter set 71. Vice versa, it monitors the speech inputs of the user and calculates the input parameter set 72 based on these inputs.

## Claims

1. A terminal (4, 5, 6) for communicating via a telecommunication network (1), in particular a wireless telephone, wherein the terminal (4, 5, 6) comprises a loudspeaker (46, 56, 692), a microphone (21, 31, 81), a transceiver unit (41, 51, 62, 63) for sending and receiving data via the telecommunication network (1) and a coding/decoding unit (42, 52, 62, 63) for coding/decoding speech data exchanged via the telecommunication network (1),
the terminal further comprising a parametrizable control unit (47, 57, 7) adapted to use a user specific output parameter set (49, 59, 71) for adapting the acoustic speech signal (22, 32, 82) outputted by the loudspeaker (46, 56, 692) to the individual hearing characteristic of the user (2, 3) of the terminal (4, 5, 6), **characterized in that** the control unit (47, 57, 7) is adapted to control the adjustment of the decoding algorithm of the coding/decoding unit (42, 52, 62, 63) to said individual hearing characteristic and is adapted to use a user specific input parameter set (48, 58, 72) based on speech characteristic of the user (2, 3) to control the adjustment of the coding algorithm of the coding/decoding unit (42, 52, 62, 63) and to adapt the vocal characteristic of an acoustic speech signal (21, 31, 81) received by the microphone (45, 55, 691) to a normalized speech characteristic .

2. The terminal (4, 5) of claim 1,
**characterized in**
**that** the control unit (47, 57) is adapted to control the adjustment of a filter unit (43, 53) for postfiltering the decoded speech to the specific hearing characteristics of the user (2, 3) of the terminal (4, 5).

3. The terminal (6) of claim 1,
**characterized in**
**that** the terminal (6) comprises a speech adaptation unit (65) for adjusting, under control of the control unit (7), the frequency characteristic of the speech signal to the frequency specific hearing characteristic of the user.

4. The terminal (6) of claim 3,
**characterized in**
**that** the speech adaptation unit (65) comprises a frequency shaping unit (653) for applying different amplification levels to different frequency ranges.

5. The terminal (6) of claim 3,
**characterized in**
**that** the speech adaptation unit (65) comprises a frequency compression unit (652) adapted to shift information encoded in frequency ranges specified by the control unit (7) to other frequency ranges by applying dynamic frequency range compression.

6. The terminal (6) of claim 1,
**characterized in**
**that** the control unit (7) is adapted to determine the hearing characteristic of the user at a personalization phase, and to calculate and store the user specific output parameter set (71) based on the determined hearing characteristic.

7. The terminal (4, 5) of claim 1,
**characterized in**
**that** the control unit (47, 57) is adapted to receive data about the hearing characteristic of the user (2, 3) via the telecommunication network (1) or via a communication interface of the terminal (4, 5), and to calculate and store the user specific output parameter set (49, 59) based on the determined hearing characteristic.

8. A method of communicating through a terminal (4, 5, 6), in particular through a wireless telephone, via a telecommunication network (1),
wherein a transceiver unit (41, 51, 61) of the terminal (4, 5 ,6) receives encoded speech data from the telecommunication network (1), a coding/decoding unit (42, 52, 62, 63) of the terminal (4, 5, 6) decodes the speech data, and a loudspeaker (46, 56, 652) of the terminal (4, 5, 6) outputs a correspondent acoustic speech signal (22, 32, 82), in which
a parametrizable control unit (47, 57, 7) of the terminal (4, 5, 6) uses a user specific output parameter set (49, 59, 71) for adapting the acoustic speech signal (46, 56, 82) outputted by the loudspeaker (46, 56, 692) to the individual hearing characteristic of the user (2, 3) of the terminal (4, 5, 6) **characterized in that** it comprises a step of controlling the adjustment of the decoding algorithm of the coding/decoding unit (42, 52, 62, 63) to said individual hearing characteristic and a step of controlling the adjustment of the coding algorithm of the coding/decoding unit (42, 52, 62, 63) by using a user specific input parameter set (48, 58, 72) based on speech characteristic of the user, and of adapting the vocal characteristic of an acoustic speech signal (21, 31, 81) received by the microphone (45, 55, 691) to a normalized speech characteristic.

## Patentansprüche

1. Endgerät (4, 5, 6) zum Kommunizieren über ein Telekommunikationsnetz (1), insbesondere ein drahtloses Telefon, wobei das Endgerät (4, 5, 6) Folgendes umfasst:
einen Lautsprecher (46, 56, 692), ein Mikrofon (21, 31, 81), einen Transceiver (41, 51, 62, 63) zum Senden und Empfangen von Daten über das Telekommunikationsnetz (1) und
eine Coder-/Decodiereinheit (42, 52, 62, 63) zum Codieren/Decodieren von über das Telekommunikationsnetz (1) ausgetauschten Sprachdaten, wobei das Endgerät ferner eine parametrisierbare Steuereinheit (47, 57, 7) umfasst, die so gestaltet ist, dass sie einen nutzerspezifischen Ausgangsparametersatz (49, 59, 71) zum Adaptieren des vom Lautsprecher (46, 56, 692) ausgegebenen akustischen Sprachsignals (22, 32, 82) in die individuelle Hörcharakteristik des Nutzers (2, 3) des Endgeräts (4, 5, 6) benutzen kann, **dadurch gekennzeichnet, dass** die Steuereinheit (47, 57, 7) so gestaltet ist, dass sie die Justierung des Decodieralgorithmus der Codier-/Decodiereinheit (42, 52, 62, 63) auf die genannte individuelle Hörcharakteristik steuert und einen nutzerspezifischen Eingangsparametersatz (48, 58, 72) auf der Basis einer Sprachcharakteristik des Benutzers (2, 3) benutzt, um die Justierung des Codieralgorithmus der Codier-/Decodiereinheit (42, 52, 62, 63) zu steuern und die Stimmcharakteristik eines vom Mikrofon (45, 55, 691) empfangenen akustischen Sprachsignals (21, 31, 81) in eine normalisierte Sprachcharakteristik zu adaptieren.

2. Endgerät (4, 5) nach Anspruch 1, **dadurch gekennzeichnet, dass** die Steuereinheit (47, 57) so ausgelegt ist, dass sie die Justierung einer Filtereinheit (43, 53) zum Nachfiltern der decodierten Sprache zu den speziellen Hörcharakteristiken des Benutzers (2, 3) des Endgerätes (4, 5) steuert.

3. Endgerät (6) nach Anspruch 1, **dadurch gekennzeichnet, dass** das Endgerät (6) eine Sprachadaptionseinheit (65) zum Justieren, von der Steuereinheit (7) gesteuert, der Frequenzkennlinie des Sprachsignals auf die frequenzspezifische Hörcharakteristik des Benutzers umfasst.

4. Endgerät (6) nach Anspruch 3, **dadurch gekennzeichnet, dass** die Sprachadaptionseinheit (65) eine Frequenzformungseinheit (653) zum Anwenden verschiedener Verstärkungsniveaus auf verschiedene Frequenzbereiche umfasst.

5. Endgerät (6) nach Anspruch 3, **dadurch gekennzeichnet, dass** die Sprachadaptionseinheit (65) eine Frequenzkompressionseinheit (652) umfasst, um von der Steuereinheit (7) in vorgegebene Frequenzbereiche codierte Informationen durch Anwenden von dynamischer Frequenzbereichskompression in andere Frequenzbereiche zu verschieben.

6. Endgerät (6) nach Anspruch 1, **dadurch gekennzeichnet, dass** die Steuereinheit (7) so ausgelegt ist, dass sie in einer Personalisierungsphase die Hörcharakteristik des Benutzers bestimmt und den nutzerspezifischen Ausgangsparametersatz (71) auf der Basis der ermittelten Hörcharakteristik berechnet und speichert.

7. Endgerät (4, 5) nach Anspruch 1, **dadurch gekennzeichnet, dass** die Steuereinheit (47, 57) so ausgelegt ist, dass sie Daten über die Hörcharakteristik des Benutzers (2, 3) über das Telekommunikationsnetz (1) oder über eine Kommunikationsschnittstelle des Endgerätes (4, 5) empfängt und den nutzerspezifischen Ausgangsparametersatz (49, 59) auf der Basis der ermittelten Hörcharakteristik berechnet und speichert.

8. Verfahren zum Kommunizieren durch ein Endgerät (4, 5, 6), insbesondere durch ein drahtloses Telefon, über ein Telekommunikationsnetz (1), wobei ein Transceiver (41, 51, 61) des Endgeräts (4, 5, 6) codierte Sprachdaten vom Telekommunikationsnetz (1) empfängt, eine Codier-/Decodiereinheit (42, 52, 62, 63) des Endgeräts (4, 5, 6) die Sprachdaten decodiert und ein Lautsprecher (46, 56, 652) des Endgeräts (4, 5, 6) ein entsprechendes akustisches Sprachsignal (22, 32, 82) ausgibt, wobei eine parametrisierbare Steuereinheit (47, 57, 7) des Endgeräts (4, 5, 6) einen nutzerspezifischen Ausgangsparametersatz (49, 59, 71) zum Adaptieren des vom Lautsprecher (46, 56, 692) ausgegebenen akustischen Sprachsignals (46, 56, 82) an die individuelle Hörcharakteristik des Benutzers (2, 3) des Endgerätes (4, 5, 6) benutzt, **dadurch gekennzeichnet, dass** es einen Schritt des Steuerns der Justierung des Decodieralgorithmus der Codier-/Decodiereinheit (42, 52, 62, 63) an die genannte individuelle Hörcharakteristik und einen Schritt des Steuerns der Justierung des Codieralgorithmus der Codier-/Decodiereinheit (42, 52, 62, 63) durch Benutzen eines nutzerspezifischen Parametersatzes (48, 58, 72) auf der Basis der Sprachcharakteristik des Benutzers und zum Adaptieren der Stimmcharakteristik eines vom Mikrophon (45, 55, 691) empfangenen akustischen Sprachsignals (21, 31, 81) in eine normalisierte Sprachcharakteristik beinhaltet.

## Revendications

1. Terminal (4, 5, 6) pour communiquer via un réseau de télécommunication (1), en particulier un téléphone sans fil, ledit terminal (4, 5, 6) comprenant un haut-parleur (46, 56, 692), un microphone (21, 31, 81), un émetteur-récepteur (41, 51, 62, 63) pour envoyer et recevoir des données via le réseau de télécommunication (1) et une unité de codage/décodage (42, 52, 62, 63) pour coder/décoder les données vocales échangées via le réseau de télécommunication (1),
le terminal comprenant en outre une unité de commande paramétrable (47, 57, 7) adaptée pour utiliser un ensemble de paramètres de sortie spécifique à l'utilisateur (49, 59, 71) pour adapter le signal de parole acoustique (22, 32, 82) fourni par le haut-parleur (46, 56, 692) à la caractéristique d'audition individuelle de l'utilisateur (2, 3) du terminal (4, 5, 6), **caractérisé en ce que** l'unité de commande (47, 57, 7) est adaptée pour commander l'ajustement de l'algorithme de décodage de l'unité de codage/décodage (42, 52, 62, 63) à ladite caractéristique d'audition individuelle et est adaptée pour utiliser un ensemble de paramètres d'entrée spécifique à un utilisateur (48, 58, 72) basé sur une caractéristique vocale de l'utilisateur (2, 3) pour commander l'ajustement de l'algorithme de codage de l'unité de codage/décodage (42, 52, 62, 63) et pour adapter la caractéristique vocale d'un signal de parole acoustique (21, 31, 81) reçu par le microphone (45, 55, 691) à une caractéristique de parole normalisée.

2. Terminal (4, 5) selon la revendication 1, **caractérisé en ce que**
l'unité de commande (47, 57) est adaptée pour commander l'ajustement d'une unité de filtrage (43, 53) pour post-filtrer la parole décodée aux caractéristiques d'audition spécifiques de l'utilisateur (2, 3) du terminal (4, 5).

3. Terminal (6) selon la revendication 1, **caractérisé en ce que**
le terminal (6) comprend une unité d'adaptation vocale (65) pour ajuster, sous la commande de l'unité de commande (7), la caractéristique de fréquence du signal de parole à la caractéristique d'audition spécifique de fréquence de l'utilisateur.

4. Terminal (6) selon la revendication 3, **caractérisé en ce que**
l'unité d'adaptation vocale (65) comprend une unité de mise en forme de fréquence (653) pour appliquer différents niveaux d'amplification à différentes plages de fréquence.

5. Terminal (6) selon la revendication 3, **caractérisé en ce que**
l'unité d'adaptation vocale (65) comprend une unité de compression de fréquence (652) adaptée pour déplacer les informations codées dans des plages de fréquence codées spécifiées par l'unité de commande (7) à d'autres plages de fréquence en appliquant une compression de plage de fréquence dynamique.

6. Terminal (6) selon la revendication 1, **caractérisé en ce que**
l'unité de commande (7) est adaptée pour déterminer la caractéristique d'audition de l'utilisateur à une phase de personnalisation, et pour calculer et stocker l'ensemble de paramètres de sortie spécifique à l'utilisateur (71) d'après la caractéristique d'audition déterminée.

7. Terminal (4, 5) selon la revendication 1, **caractérisé en ce que**
l'unité de commande (47, 57) est adaptée pour recevoir des données sur la caractéristique d'audition de l'utilisateur (2, 3) via le réseau de télécommunication (1) ou via une interface de communication du terminal (4, 5), et pour calculer et stocker l'ensemble de paramètres de sortie spécifique à l'utilisateur (49, 59) d'après la caractéristique d'audition déterminée.

8. Procédé de communication par l'intermédiaire d'un terminal (4, 5, 6), en particulier par l'intermédiaire d'un téléphone sans fil, via un réseau de télécommunication (1), dans lequel un émetteur-récepteur (41, 51, 61) du terminal (4, 5, 6) reçoit des données vocales codées du réseau de télécommunication (1), une unité de codage/décodage (42, 52, 62, 63) du terminal (4, 5, 6) décode les données vocales, et un haut-parleur (46, 56, 652) du terminal (4, 5, 6) fournit un signal de parole acoustique correspondant (22, 32, 82); dans lequel une unité de commande paramétrable (47, 57, 7) du terminal (4, 5, 6) utilise un ensemble de paramètres de sortie spécifique à l'utilisateur (49, 59, 71) pour adapter le signal de parole acoustique (46, 56, 82) fourni par le haut-parleur (46, 56, 692) à la caractéristique d'audition individuelle de l'utilisateur (2, 3) du terminal (4, 5, 6), **caractérisé en ce qu'**il comprend une étape de contrôle de l'ajustement de l'algorithme de décodage de l'unité de codage/décodage (42, 52, 62, 63) à ladite caractéristique d'audition individuelle, et une étape de contrôle de l'ajustement de l'algorithme de codage de l'unité de codage/décodage (42, 52, 62, 63) en utilisant un ensemble de paramètres d'entrée spécifique à l'utilisateur (48, 58, 72) d'après la caractéristique de parole de l'utilisateur, et d'adaptation de la caractéristique vocale d'un signal de parole acoustique (21, 31, 81) reçu par le microphone (45, 55, 691) à une caractéristique de parole normalisée.
